# EUROPEAN PATENT SPECIFICATION

(11) **EP 2 775 192 B1**
(45) Date of publication and mention of the grant of the patent: **06.09.2017**
(21) Application number: 13180253.0
(22) Date of filing: 13.08.2013
(51) Int. Cl.: F16M 11/10, F16M 11/22

(54) **Display device and point-of-sale system having the display device**
Anzeigevorrichtung und Verkaufsstellensystem mit der Anzeigevorrichtung
Dispositif d'affichage et système de point de vente présentant le dispositif d'affichage

(30) Priority: 07.02.2013 TW 102104832; 07.02.2013 TW 102202761; 07.02.2013 TW 102301111
(43) Date of publication of application: 10.09.2014
(73) Proprietor: Flytech Technology Co., Ltd., Taipei City 114 (TW)
(72) Inventor: Lïn, Chiung-Chi, 11494 Taipei City 114 (TW)
(74) Representative: Zinkler, Franz

(56) References cited:
- EP-A2- 1 995 507
- US-A- 5 904 328
- US-A1- 2012 145 787
- F O Sommez: "Optimal shape design of shoulder fillets for flat and round bars under various loadings", , vol. 223 24 February 2009 (2009-02-24), pages 1741-1754, XP002729716, Department of Mechanical Engineering, Bogazici University, Bebek 34342, Istambul, Turkey Retrieved from the Internet: URL:http://web.boun.edu.tr/sonmezfa/Optima l%20shape%20design%20of%20shoulder%20fille ts%20for%20flat%20and%20round%20bars%20und er%20various%20loadings.pdf [retrieved on 2014-09-12]
- www.e-CAD-Engineering.co.uk: "Setting-up and running a Solidworks simulation study", , 5 June 2012 (2012-06-05), XP054975516, Retrieved from the Internet: URL:https://www.youtube.com/watch?v=LOa3MX H9P4c [retrieved on 2014-09-15]

## Description

The invention relates to a display device, more particularly to a display device having a support base for supporting a display screen and a Point-of-Sale (POS) system having the display device.

A Point-of-Sale (POS) system currently applied in supermarkets, malls or stores is usually used in conjunction with a cash register. The POS system includes a support base supported on a flat surface, and a touch-type display screen disposed on the support base for touching by a user. Since the force applied on the display screen is not the same for each user, the display screen is likely to shake, thereby making it inconvenient to use.

Further, assembly and disassembly of the display screen and the host computer of an existing POS system are complicated and inconvenient, so that when repair or replacement of the display screen or the host computer is desired, a lot of working hours is consumed.

EP 1 995 507 A2 describes a display device according to the preamble of claim 1 which includes a body stand unit; a display displaying unit; and an arm unit, arranged upright from the body stand unit, for supporting the display displaying unit; where the arm unit is arranged on either left or right end side from a center in a horizontal direction of the display displaying unit, and supports the display displaying unit in a cantilever state.

F O Sommez: "Optimal shape design of shoulder fillets for flat and round bars under various loadings", , vol. 223 24 February 2009 (2009-02-24), pages 1741-1754, XP002729716, Department of Mechanical Engineering, Bogazici University, Bebek 34342, Istanbul, Turkey describes an optimization for fillets which are usually the most critical regions in mechanical parts especially under fatigue loading, considering that an increase in the maximum stress level considerably shortens the fatigue life of a part. The aim is to find the best shape for a fillet in a shouldered shaft or plate so that the maximum equivalent stress has the lowest possible value.

www.e-CAD-Engineering.co.uk: "Setting-up and running a Solidworks simulation study", , 5 June 2012 (2012-06-05), XP054975516, describes setting-up and running a Solidworks simulation study.

It is an object of the present invention to provide a Point-of-Sale system having a display device, wherein a support base of the display device can stably support a display screen, so that when a user touches the display screen, the display screen will not easily shake, and wherein the display screen of the display device and a host computer can be conveniently and quickly assembled to and disassembled from a support base to facilitate repair or replacement of the display screen or the host computer.

This object is achieved by a Point-of-Sale system of claim 1.

The efficiency of the present invention resides in that because of the abutment of the base plate of the support base with the flat surface through the foot pads, the structural design between the suspension arm and the upright frame body, and the connecting relationship between the hinges of the pivot mechanism and the suspension arm, the support base can stably support the first display screen. When the first display screen is touched by a user, the first display screen does not easily shake. Furthermore, through the configuration of the receiving notch of the suspension arm, when the first display screen is rotated to the second position, the first opening portion of the receiving notch is exposed, so that the first display screen can be easily and quickly detached from or assembled to the suspension arm, thereby facilitating repair or replacement of the first display screen. Moreover, through the configuration of the locking mechanism, the side cover of the host computer can be conveniently and quickly detached from or assembled to the upright frame body, thereby facilitating repair or replacement of the electronic unit of the host computer.

Other features and advantages of the present invention will become apparent in the following detailed description of the preferred embodiment with reference to the accompanying drawings, of which:
Fig. 1 is a perspective view of a Point-of-Sale (POS) system according to the preferred embodiment of this invention, illustrating a first display screen in a first position;
Fig. 2 is an exploded perspective view of the preferred embodiment;
Fig. 3 is a partly exploded perspective view of the preferred embodiment taken from another angle;
Fig. 4 is another perspective view of the preferred embodiment, illustrating the first display screen in a second position;
Fig. 5 is a schematic front view of Fig. 4;
Fig. 6 is another exploded perspective view of the preferred embodiment, illustrating an assembling relation between an upright frame body and a host computer;
Fig. 7 is a perspective view of a side cover of the preferred embodiment;
Fig. 8 is a sectional view of the preferred embodiment taken along line 8-8 of Fig. 3; and
Fig. 9 is a view similar to Fig. 8, but illustrating a latching member in a release position.

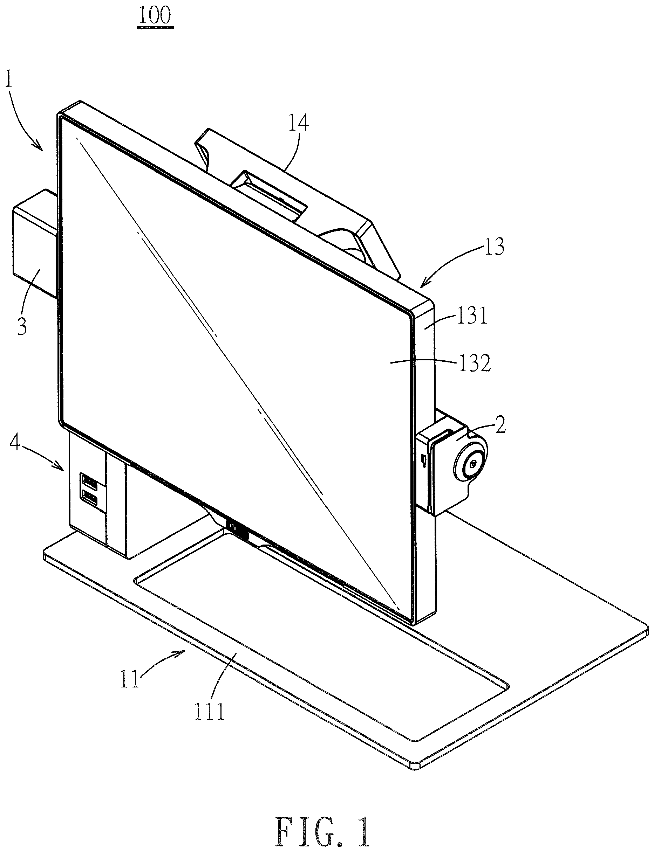

Referring to Figs. 1 to 9, a Point-of-Sale (POS) system 100 according to the preferred embodiment of the present invention comprises a display device 1, a card reader 2, a scanner 3 and a host computer 4.

The display device 1 includes a support base 11, a first display screen 13, a second display screen 14 and a pivot mechanism 15. The support base 11 includes a base plate 111 and a support frame 112. The support frame 112 includes an upright frame body 113 disposed on the support base 11 and having a side surface 115, and a suspension arm 114 projecting from the side surface 115 along a horizontal direction (Y) and spaced apart from and disposed above the base plate 111. A junction of a bottom end of the suspension arm 114 and the side surface 115 is formed with a curved chamfer 116. The first display screen 13 is a touch-type display screen for touching/pressing and viewing of related information by a store clerk at the service end. The second display screen 14 is rotatably pivoted to the back of the first display screen 13 for viewing of the related information by a customer. The pivot mechanism 15 is disposed between the suspension arm 114 and the first display screen 13. The first display screen 13 is rotatable relative to the suspension arm 114 through the pivot mechanism 15. As such, a viewing angle of the first display screen 13 can be adjusted.

The card reader 2 is disposed on one side of the first display screen 13 for reading information from, for example, a bank card. The scanner 3 is disposed on another side of the first display screen 13 that is opposite to the card reader 2 for scanning a bar code on the package of an article. The host computer 4 is disposed on the upright frame body 113, and is electrically connected to the first and second display screens 13, 14, the card reader 2 and the scanner 3. After a store clerk swipes a card through the card reader 2, related information will be displayed on the first and second display screens 13, 14 through computation by the host computer 4. When the store clerk scans a bar code on the package of an article through the scanner 3, related information will be displayed on the first and second display screens 13, 14 through computation by the host computer 4.

Because of the presence of the curved chamfer 116 at the junction of the bottom end of the suspension arm 114 and the side surface 115 of the upright frame body 113, occurrence of stress concentration on the junction of the suspension arm 114 and the side surface 115 can be avoided, and a support force for supporting the suspension arm 114 can be enhanced, thereby preventing breakage of the suspension arm 114. Thus, the support base 11 can stably support the first display screen 13, so that when a user touches the first display screen 13, it will not easily shake.

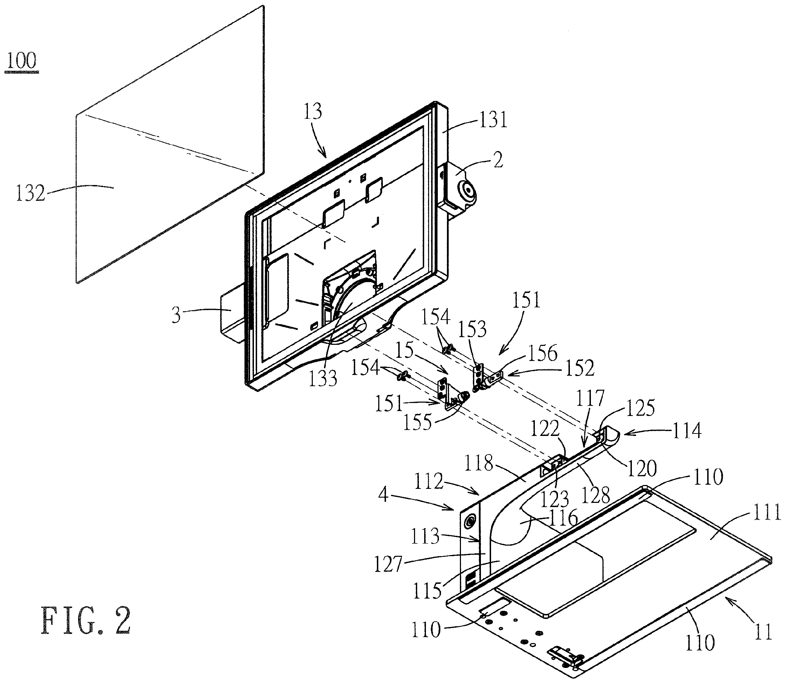

With reference to Figs. 2, 4 and 5, the suspension arm 114 of the support frame 112 projects integrally from and is in one piece with the side surface 115 of the upright frame body 113. The support frame 112 and the base plate 111 are made of metal. Specifically, each of the support frame 112 and the base plate 111 is produced by pressure casting an aluminum alloy. The base plate 111 is fixed to a bottom end of the upright frame body 113 using, for example, a screw-fastening method. Since each of the support frame 112 and the base plate 111 is made of metal, the entire support base 11 has a good structural strength, so that the support base 11 can stably support the first display screen 13, and the second display screen 14, the card reader 2 and the scanner 3 that are assembled to the first display screen 13. Furthermore, in this embodiment, the base plate 111 is rectangular and has a first length (L1) extending along the horizontal direction (Y), and the suspension arm 114 has a second length (L2) also extending along the horizontal direction (Y), but smaller than the first length (L1). This can prevent the support base 11 from toppling over as a result of a torque generated from a downward force applied to the suspension arm 114 by the first and second display screens 13, 14, the card reader 2 and the scanner 3.

Moreover, the support base 11 further includes a plurality of foot pads 110 disposed on a bottom surface of the base plate 111. Each of the foot pads 110 can be fixed to the bottom surface of the base plate 111 using, for example, an adhesive bonding method. Each foot pad 110 is made of a flexible material, such as rubber or silicone, and is used for abutting against a flat surface (not shown), such as a tabletop. Through this, friction between the base plate 111 and the flat surface can be enhanced, so that the base plate 111 cannot easily slide relative to the flat surface.

The suspension arm 114 is formed with a receiving notch 117. The pivot mechanism 15 includes two hinges 151 disposed between the suspension arm 114 and the first display screen 13. The hinges 151 are fixed in the receiving notch 117 in a spaced apart relationship along the horizontal direction (Y) so as to distribute supporting forces that support the first display screen 13.

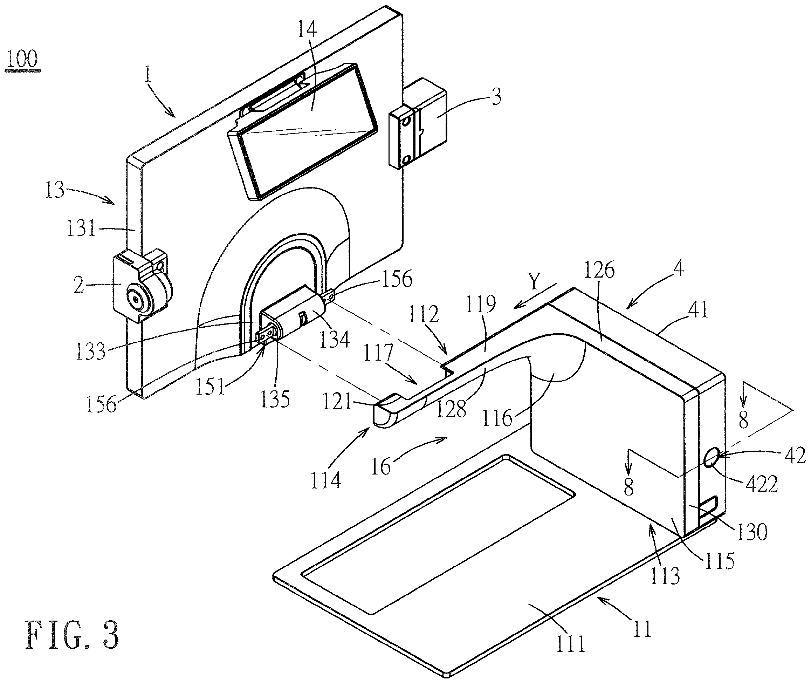

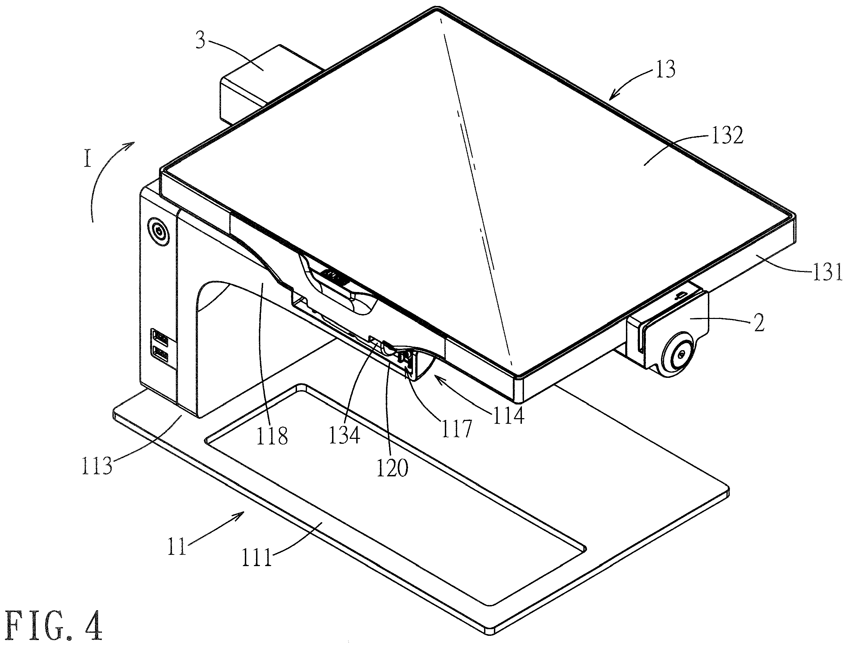

The first display screen 13 includes a housing 131, and a display body 132 disposed in the housing 131. The housing 131 has a rear plate 133, and a protruding cover 134 projecting rearwardly from the rear plate 133 in proximity to a bottom end thereof. Left and right sides of the protruding cover 134 are respectively formed with an opening 135 (only one opening 135 is shown in Fig. 3). The hinges 151 are disposed in the protruding cover 134. Each hinge 151, as shown in Fig. 2, includes a fixing member 152, a connecting member 153 and two screws 154. The fixing member 151 includes a pivot portion 155 parallel to the horizontal direction (Y), and a fixed plate 156 formed on one end of the pivot portion 155 and projecting out of a respective opening 135. The two screws 154 are used to fix the fixed plate 156 to the suspension arm 114. The connecting member 153 is rotatably pivoted to the pivot portion 155, and is fixedly screwed to the rear plate 133. Through this configuration, the first display screen 13 is rotatable relative to the suspension arm 114 about the pivot portions 155 of the hinges 151 between a first position, as shown in Fig. 1, and a second position, as shown in Fig. 4.

The suspension arm 114 includes a front side wall 118, a top wall 119 connected to a top end of the front side wall 118, and two positioning pieces 122 disposed in the receiving notch 117. The receiving notch 117 has a first opening portion 120 formed in the front side wall 118, and a second opening portion 121 formed in the top wall 119 and communicating with the first opening portion 120. Each of the positioning pieces 122 has an abutment surface 123 abutting against the fixed plate 156 of the respective hinge 151, and two supporting ribs 124 projecting from the abutment surface 123 and located spaced apart below the top wall 119. The abutment surface 123 is formed with two threaded holes 125 for receiving the respective screws 154. Through this, the fixed plate 156 of each hinge 151 can be fixed to the abutment surface 123 of the respective positioning piece 122. Further, the top wall 119 of the suspension arm 114 and the supporting ribs 124 of each positioning piece 122 cooperatively clamp upper and lower ends of the fixed plate 156 of the corresponding hinge 151. As such, apart from preventing upward and downward movement of the fixed plate 156, stability of supporting the fixed plate 156 can also be enhanced. It should be noted that the number of the supporting ribs 124 of each positioning piece 122 is not limited to two, and may be one or more than two.

With reference to Figs. 1 and 2, when the first display screen 13 is in the first position, the first display screen 13 is upright, the store clerk can view or touch the display body 132 of the first display screen 13, and the customer can view the second display screen 14. Furthermore, the housing 131 of the first display screen 13 can cover the first opening portion 120 of the receiving notch 117, so that the screws 154 of the hinges 151 that face the first opening portion 120 are also covered by the housing 131.

With reference to Figs. 2, 4 and 5, when the first display screen 13 is rotated from the first position to the second position along the direction of an arrow (I), the first display screen 13 is horizontal, and the first opening portion 120 is exposed and is not covered by the housing 131 of the first display screen 13. At this time, a repairman can conveniently and quickly insert an auxiliary tool, such as a screwdriver, into the exposed first opening portion 120 to loosen and remove the screws 154 from the threaded holes 125. As such, the first display screen 13 can be quickly detached from the suspension arm 114 to facilitate repair or replacement of the first display screen 13, the second display screen 14, the card reader 2 or the scanner 3. To assemble the first display screen 13 back to the suspension arm 114, the protruding cover 134 of the housing 131 is first placed in the receiving notch 117 via the first opening portion 120 such that the fixed plate 156 of each hinge 151 abuts against the abutment surface 123 of the respective positioning piece 122. Afterwards, the screws 154 are inserted through the fixed plate 156 to engage with the respective threaded holes 125. Hence, the first display screen 13 is assembled back to the suspension arm 114.

Referring once again to Figs. 2, 3 and 5, the upright frame body 113 of the support frame 112 includes a top plate 126 and a front plate 127. The front side wall 118 of the suspension arm 114 is connected to and flush with the front plate 127, so that the first display screen 13 is proximate to the store clerk to facilitate touching or viewing of the first display screen 13 by the store clerk. Further, the top wall 119 of the suspension arm 114 is connected to and flush with the top plate 126. The base plate 111, the upright frame body 113 and the suspension arm 114 can cooperatively define a large accommodating space 16 for accommodating, for example, a cash register or other peripherals.

Because the front side wall 118 is flush with the front plate 127 and the top wall 119 is flush with the top plate 126, a junction of the front side wall 118 and the upright frame body 113 and a junction of the top wall 119 and the upright frame body 113 will not form connecting structures with sharp angles so as to avoid occurrence of stress concentration on the connecting structures. The suspension arm 114 further includes a curved connecting wall 128 connected between the front side wall 118 and the top wall 119. The curved chamfer 116 is formed between the curved connecting wall 128 and the side surface 115. Since the front side wall 118 and the top wall 119 are flush with the front plate 127 and the top plate 126, respectively, and the curved connecting wall 128 is connected to the side surface 115 through the curved chamfer 116, the connection of the entire suspension arm 114 with the upright frame body 113 will not form connecting structures with sharp angles. This can effectively avoid occurrence of stress concentration and prevent the suspension arm 114 from breaking.

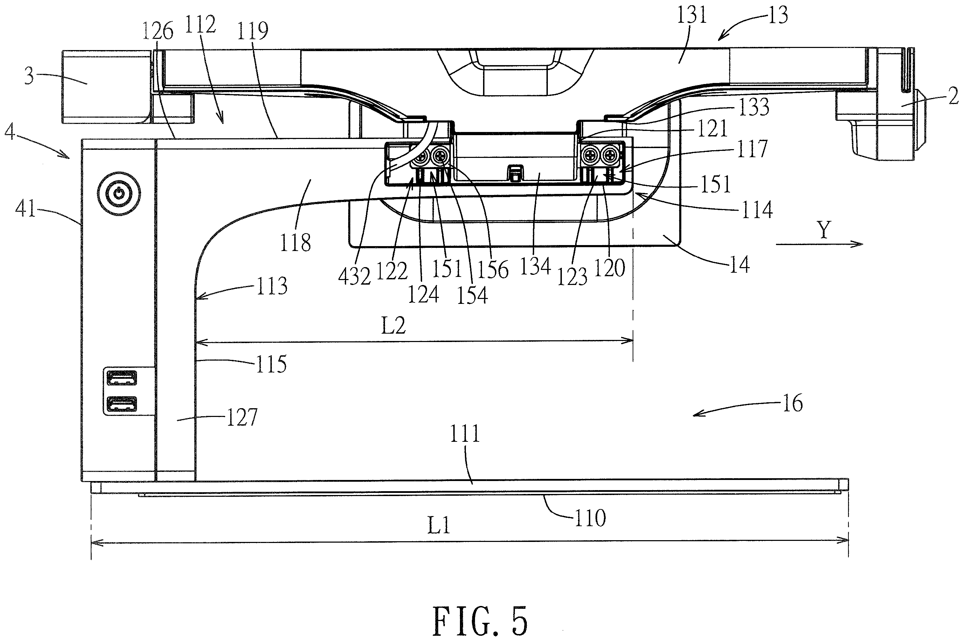

With reference to Figs. 5 to 7, the host computer 4 includes a side cover 41 assembled to a side of the upright frame body 113 that is opposite to the side surface 115, a locking mechanism 42 disposed on the side cover 41 to lock the same on the upright frame body 113, and an electronic unit 43. The side cover 41 and the upright frame body 113 cooperatively define a receiving space 44. The suspension arm 114 is formed with a through hole 129 communicating with the receiving notch 117 and the receiving space 44. The electronic unit 43 is disposed in the receiving space 44, and includes a circuit board 431, and a cable 432 electrically connected to the circuit board 431. The cable 432 passes through the through hole 129 and a passage hole 136 in the housing 131. The first display screen 13, the second display screen 14, the card reader 2 and the scanner 3 are electrically connected to the circuit board 431 through the cable 432. The cable 432 is used to transmit electrical signals to the first and second display screens 13, 14, the card reader 2 and the scanner 3. By passing the cable 432 through the through hole 129, the cable 432 can be hidden and is prevented from being exposed, thereby enhancing an overall aesthetic appearance of the Point-of-Sale system 100.

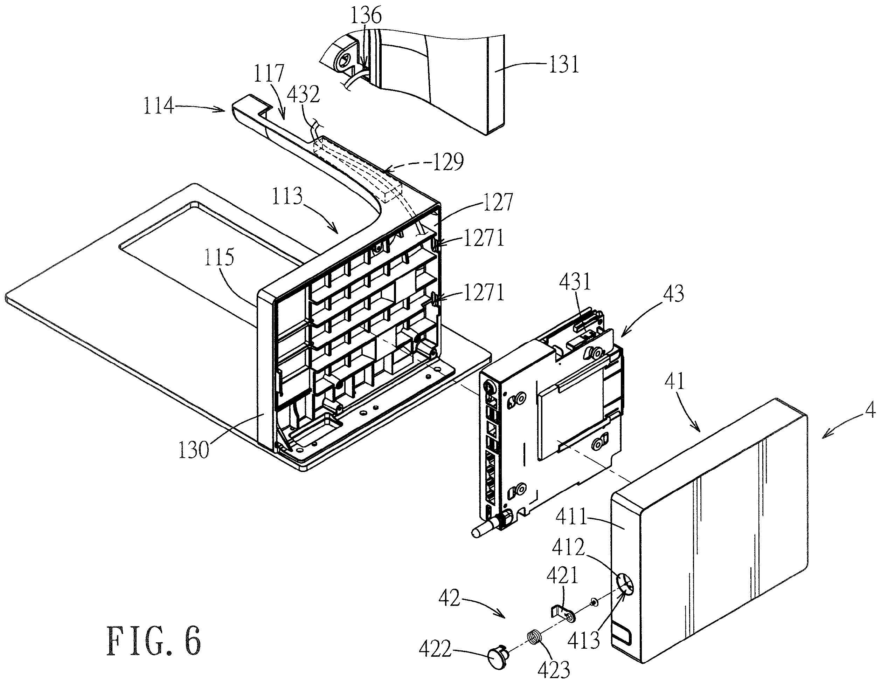

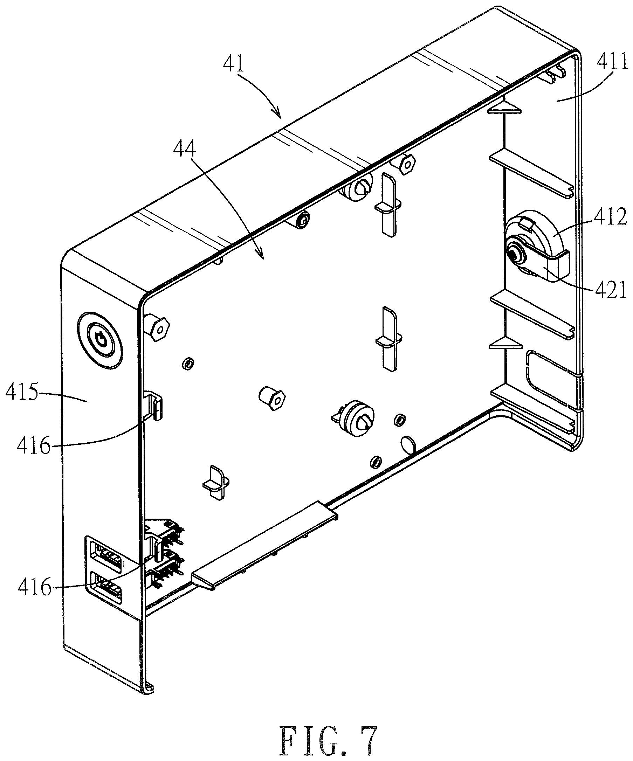

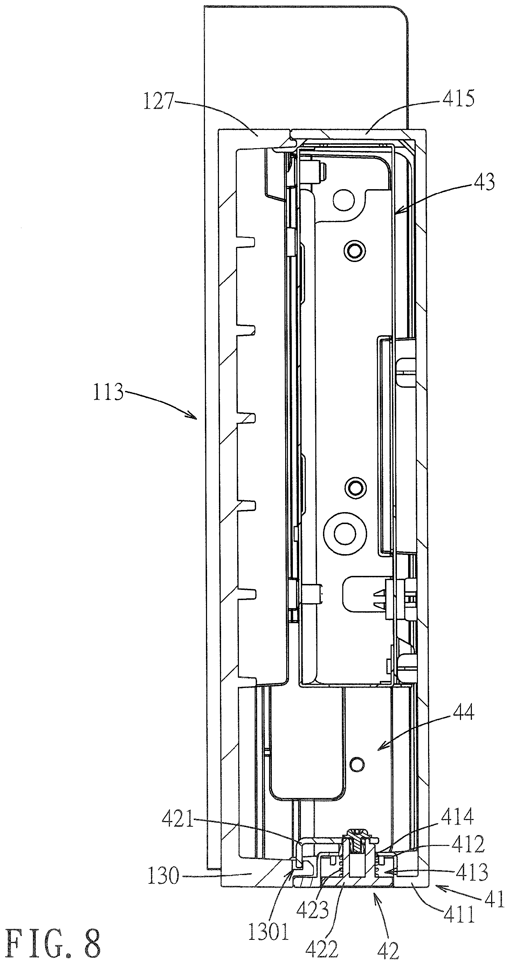

Referring to Fig. 8, in combination with Figs. 6 and 7, the upright frame body 113 further includes a rear plate 130 opposite to and spaced apart from the front plate 127 and formed with a first latching hole 1301. The front plate 127 is formed with two second latching holes 1270 spaced apart in an up-down direction. The side cover 41 includes a rear wall 411, and a mounting seat 412 indented inwardly and forwardly from the rear wall 411. The mounting seat 412 defines a recess 413, and is formed with a through hole 414 communicating the recess 413 with the receiving space 44. The side cover 41 further includes a front wall 415, and two latching hooks 416 projecting from the front wall 415 and engaged to the respective second latching holes 1271.

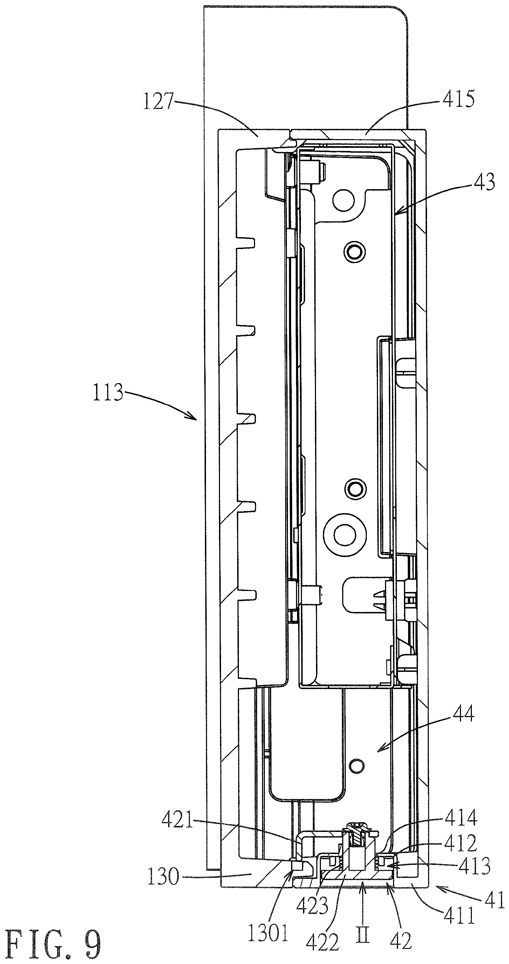

The locking mechanism 42 includes a latching member 421 engaged to the first latching hole 1301, a lock-releasing button 422 that is disposed in the recess 413 and that extends through the through hole 414 to connect with the latching member 421, and a biasing spring 423 disposed in the recess 413. The lock-releasing button 422 is operable to push the latching member 421 away from the first latching hole 1301 along a rear-to-front release direction (II) (see Fig. 9). The biasing spring 423 is a compression spring that is sleeved on the lock-releasing button 422 for biasing the lock-releasing button in a direction opposite to the release direction (II), so that the latching member 421 can be maintained in a latching position (see Fig. 8), where the latching member 421 is engaged to the first latching hole 1301.

Referring to Fig. 9, in combination with Fig. 8, to detach the side cover 41 from the upright frame body 113 so as to perform repair or replacement of the electronic unit 43, the lock-releasing button 422 is pressed along the release direction (II) so as to move forwardly. During movement of the lock-releasing button 422 in the release direction (II), the biasing spring 423 is compressed, and the latching member 421 is gradually moved away from the first latching hole 1301. When the latching member 421 is moved to a release position shown in Fig. 9, the latching member 421 is completely detached from first latching hole 1301. At this time, the rear wall 411 of the side cover 41 can be pulled outwardly, and the latching hooks 416 are disengaged from the respective second latching holes 1274 (see Fig. 6). Hence, removal of the side cover 41 from the upright frame body 113 is achieved, so that repair or replacement of the electronic unit 43 can be facilitated.

With reference to Figs. 6 to 8, to assemble the side cover 41 back to the upright frame body 113, the latching hooks 416 are first engaged to the respective second latching holes 1271, after which the lock-releasing button 422 is pressed to move the latching members 421 to the release position. The rear wall 411 of the side cover 41 is then brought to abut against the rear plate 130 of the upright frame body 113, such that the latching member 421 is aligned with the first latching hole 1301. Finally, the lock-releasing button 422 is released from being pressed, and the latching member 421 is automatically restored to the latching position through the restoring force of the biasing spring 423. Through the configuration of the locking mechanism 42, the side cover 41 can be conveniently and quickly detached from or assembled to the upright frame body 113 to perform repair or replacement of the electronic unit 43.

In summary, the Point-of-Sale system 100 of this embodiment, because of the abutment of the base plate 111 of the support base 11 with the flat surface through the foot pads 110, the structural design between the suspension arm 114 and the upright frame body 113, and the connecting relationship between the hinges 151 of the pivot mechanism 15 and the suspension arm 114, the support base 11 can stably support the first display screen 13. When the first display screen 13 is touched by a user, the first display screen 13 does not easily shake. Furthermore, through the configuration of the receiving notch 117 of the suspension arm 114, when the first display screen 13 is rotated to the second position, the first opening portion 120 of the receiving notch 117 is exposed, so that the first display screen 13 can be easily and quickly detached from or assembled to the suspension arm 114, thereby facilitating repair or replacement of the first display screen 13. Moreover, through the configuration of the locking mechanism 4, the side cover 41 of the host computer 4 can be conveniently and quickly detached from or assembled to the upright frame body 113, thereby facilitating repair or replacement of the electronic unit 43 of the host computer. Therefore, the objects of this invention can be achieved.

## Claims

1. A Point-of-Sale (POS) system, comprising:
a display device including
a support base (11) including a base plate (111) and a support frame (112), said support frame (112) including an upright frame body (113) disposed on said base plate (111) and having a side surface (115), and a suspension arm (114) projecting from said side surface (115) along a horizontal direction (Y) and spaced apart from and disposed above said base plate (111), a junction of a bottom end of said suspension arm (114) and said side surface (115) being formed with a curved chamfer (116),
a touch-type display screen (13), and
a pivot mechanism (15) disposed between said suspension arm (114) and said display screen (13), said display screen (13) being rotatable relative to said suspension arm (114) through
said pivot mechanism (15), **characterized in that** the point-of-sale system further comprises a card reader (2) disposed on one side of said display screen (13); and
a host computer (4) disposed on said upright frame body (113) and electrically connected to said display screen and said card reader, said host computer (4) including a side cover (41) assembled to a side of said upright frame body (113) that is opposite to said side surface (115), and a locking mechanism (42) disposed on said side cover (41) to lock said side cover (41) on said upright frame body (113) ; wherein said upright frame body (113) is formed with a first latching hole (1301) and a second latching hole (1271) on two opposite sides thereof, said locking mechanism (42) including a latching member (421) engaged to said first latching hole (1301), a lock-releasing button (422) connected to said latching member (421), and a biasing spring (423), said lock-releasing button (422) being operable to push said latching member (421) away from said first latching hole (1301) along a release direction (II), said biasing spring (423) biasing said lock-releasing button (422) in a direction opposite to said release direction (II), said side cover (41) including an latching hook (416) engaged to said second latching hole (1271).

2. The POS system as claimed in Claim 11, **characterized in that** said suspension arm (114) projects integrally from and is in one piece with said side surface (115), and said base plate (111) and said support frame (112) are made of metal.

3. The POS system as claimed in Claim 12, **characterized in that** said base plate (111) has a first length (L1) extending along said horizontal direction (Y), and said suspension arm (114) has a second length (L2) extending along said horizontal direction (Y) and smaller than said first length (L1).

4. The POS system as claimed in Claim 13, **characterized in that** said suspension arm (114) is formed with a receiving notch (117), said pivot mechanism (15) including two hinges (151) disposed between said suspension arm (114) and said first display screen (13), said hinges (151) being fixed in said receiving notch (117) in a spaced apart relationship along said horizontal direction (Y).

5. The POS system as claimed in Claim 14, **characterized in that** said receiving notch (117) has a first opening portion (120), and a second opening portion (121) communicating with said first opening portion (120), said display screen (13) including a housing (131), each of said hinges (151) being disposed in said housing (131) and including a fixed plate (156) projecting out of said housing (131), and a screw (154) fixing said fixed plate (156) to said suspension arm (114), said screw (154) facing said first opening portion (120), said display screen (13) being rotatable relative to said suspension arm (114) between a first position, where said housing (131) covers said first opening portion (120), and a second position, where said first opening portion (120) is exposed.

6. The POS system as claimed in Claim 15, **characterized in that** said suspension arm (114) includes a front side wall (118), a top wall (119) connected to a top end of said front side wall (118), and two positioning pieces (122) disposed in said receiving notch (117), said first opening portion (120) being formed in said front side wall (118), said second opening portion (121) being formed in said top wall (119), each of said positioning pieces (122) having an abutment surface (123) abutting against said fixed plate (156) of a respective one of said hinges (151), and a supporting rib (124) projecting from said abutment surface (123), said supporting ribs (124) of said positioning pieces (122) being located spaced apart below said top wall (119), said abutment surface (123) being formed with a threaded hole (125) for receiving said screw (154), said top wall (119) and said supporting rib (124) cooperatively clamping upper and lower ends of said fixed plate (156).

7. The POS system as claimed in Claim 16, **characterized in that** said upright frame body (113) includes a top plate (126) and a front plate (127), said front side wall (118) of said suspension arm (114) being connected to and flush with said front plate (127), said top wall (119) of said suspension arm (114) being connected to and flush with said top plate (126), said base plate (111), said upright frame body (113) and said suspension arm (114) cooperatively defining an accommodating space (16), said suspension arm further including a curved connecting wall (128) connected between said front side wall (118) and said top wall (119), said curved chamfer (116) being formed between said side surface (115) and said curved connecting wall (128).

8. The POS system as claimed in Claim 1, **characterized in that** said upright frame body (113) and said side cover (41) cooperatively define a receiving space (44), said suspension arm (114) being formed with a receiving notch (117), and a through hole (129) communicating with said receiving notch (117) and said receiving space (44), said display screen (13) including a housing (131), said host computer (4) further including a circuit board (431) disposed in said receiving space (44), and a cable (432) passing through said through hole (129) and said housing (131), said cable (432) being electrically connected to said display screen (13), said card reader (2) and said circuit board (431).

## Patentansprüche

1. Ein Verkaufsstellen(POS)-System, das folgende Merkmale aufweist:
eine Anzeigevorrichtung, die Folgendes umfasst:
eine Trägerbasis (11), die eine Basisplatte (111) und einen Trägerrahmen (112) umfasst, wobei der Trägerrahmen (112) einen senkrechten Rahmenkörper (113), der an der Basisplatte (111) angeordnet ist und eine Seitenoberfläche (115) aufweist, und einen Aufhängungsarm (114) umfasst, der entlang einer horizontalen Richtung (Y) von der Seitenoberfläche (115) vorsteht und von der Basisplatte (111) beabstandet und oberhalb derselben angeordnet ist, wobei eine Verbindung eines unteren Endes des Aufhängungsarms (114) und der Seitenoberfläche (115) mit einer gekrümmten Fase (116) gebildet ist,
einen Anzeigeschirm vom Berührungstyp (13) und
einen Schwenkmechanismus (15), der zwischen dem Aufhängungsarm (114) und dem Anzeigeschirm (13) angeordnet ist, wobei der Anzeigeschirm (13) durch den Schwenkmechanismus (15) relativ zu dem Aufhängungsarm (114) drehbar ist,
**dadurch gekennzeichnet, dass** das Verkaufsstellen-System ferner folgende Merkmale aufweist:
einen Kartenleser (2), der an einer Seite des Anzeigeschirms (13) angeordnet ist; und
einen Hostcomputer (4), der an dem senkrechten Rahmenkörper (113) angeordnet ist und mit dem Anzeigeschirm und dem Kartenleser elektrisch verbunden ist, wobei der Hostcomputer (4) eine Seitenabdeckung (41), die an einer Seite des senkrechten Rahmenkörpers (113) montiert ist, die der Seitenoberfläche (115) gegenüberliegt, und einen Verriegelungsmechanismus (42) umfasst, der an der Seitenabdeckung (41) angeordnet ist, um die Seitenabdeckung (41) an dem senkrechten Rahmenkörper (113) zu verriegeln;
wobei der senkrechte Rahmenkörper (113) mit einem ersten Einrastloch (1301) und einem zweiten Einrastloch (1271) an den zwei gegenüberliegenden Seiten desselben gebildet ist, wobei der Verriegelungsmechanismus (42) ein Einrastbauglied (421), das mit dem ersten Einrastloch (1301) in Eingriff steht, eine Verriegelungsfreigabetaste (422), die mit dem Einrastbauglied (421) verbunden ist, und eine Vorspannfeder (423) umfasst, wobei die Verriegelungsfreigabetaste (422) dahingehend wirksam ist, entlang einer Freigaberichtung (II) das Einrastbauglied (421) von dem ersten Einrastloch (1301) weg zu drücken, wobei die Vorspannfeder (423) die Verriegelungsfreigabetaste (422) in einer zu der Freigaberichtung (II) entgegengesetzten Richtung vorspannt, wobei die Seitenabdeckung (41) einen Einrasthaken (416) umfasst, der mit dem zweiten Einrastloch (1271) in Eingriff steht.

2. Das POS-System gemäß Anspruch 11, **dadurch gekennzeichnet, dass** der Aufhängungsarm (114) einstückig von der Seitenoberfläche (115) vorsteht und in einem Stück mit derselben ausgebildet ist und die Basisplatte (111) und der Trägerrahmen (112) aus Metall hergestellt sind.

3. Das POS-System gemäß Anspruch 12, **dadurch gekennzeichnet, dass** die Basisplatte (111) eine erste Länge (L1) aufweist, die sich entlang der horizontalen Richtung (Y) erstreckt, und der Aufhängungsarm (114) eine zweite Länge (L2) aufweist, die sich entlang der horizontalen Richtung (Y) erstreckt und kleiner als die erste Länge (L1) ist.

4. Das POS-System gemäß Anspruch 13, **dadurch gekennzeichnet, dass** der Aufhängungsarm (114) mit einer Aufnahmekerbe (117) gebildet ist, wobei der Schwenkmechanismus (15) zwei Scharniere (151) umfasst, die zwischen dem Aufhängungsarm (114) und dem ersten Anzeigeschirm (13) angeordnet sind, wobei die Scharniere (151) entlang der horizontalen Richtung (Y) in einer beabstandeten Beziehung in der Aufnahmekerbe (117) befestigt sind.

5. Das POS-System gemäß Anspruch 14, **dadurch gekennzeichnet, dass** die Aufnahmekerbe (117) einen ersten Öffnungsabschnitt (120) und einen zweiten Öffnungsabschnitt (121) aufweist, der mit dem ersten Öffnungsabschnitt (120) kommuniziert, wobei der Anzeigeschirm (13) ein Gehäuse (131) umfasst, wobei jedes der Scharniere (151) in dem Gehäuse (131) angeordnet ist und eine feste Platte (156), die von dem Gehäuse (131) vorsteht, und eine Schraube (154) umfasst, die die feste Platte (156) an dem Aufhängungsarm (114) befestigt, wobei die Schraube (154) dem ersten Öffnungsabschnitt (120) zugewandt ist, wobei der Anzeigeschirm (13) zwischen einer ersten Position, an der das Gehäuse (131) den ersten Öffnungsabschnitt (120) bedeckt, und einer zweiten Position, an der der erste Öffnungsabschnitt (120) freiliegt, relativ zu dem Aufhängungsarm (114) drehbar ist.

6. Das POS-System gemäß Anspruch 15, **dadurch gekennzeichnet, dass** der Aufhängungsarm (114) eine vordere Seitenwand (118), eine obere Wand (119), die mit einem oberen Ende der vorderen Seitenwand (118) verbunden ist, und zwei Positionierstücke (122) umfasst, die in der Aufnahmekerbe (117) angeordnet sind, wobei der erste Öffnungsabschnitt (120) in der vorderen Seitenwand (118) gebildet ist, wobei der zweite Öffnungsabschnitt (121) in der oberen Wand (119) gebildet ist, wobei jedes der Positionierstücke (122) eine Anstoßoberfläche (123), die gegen die feste Platte (156) eines jeweiligen der Scharniere (151) anstößt, und einen Trägersteg (124) aufweist, der von der Anstoßoberfläche (123) vorsteht, wobei die Trägerstege (124) der Positionierstücke (122) sich voneinander beabstandet unterhalb der oberen Wand (119) befinden, wobei die Anstoßoberfläche (123) mit einem Gewindeloch (125) zum Aufnehmen der Schraube (154) gebildet ist, wobei die obere Wand (119) und der Trägersteg (124) gemeinsam obere und untere Enden der festen Platte (156) festklemmen.

7. Das POS-System gemäß Anspruch 16, **dadurch gekennzeichnet, dass** der senkrechte Rahmenkörper (113) eine obere Platte (126) und eine vordere Platte (127) umfasst, wobei die vordere Seitenwand (118) des Aufhängungsarms (114) mit der vorderen Platte (127) verbunden und mit derselben bündig ist, wobei die obere Wand (119) des Aufhängungsarms (114) mit der oberen Platte (126) verbunden und mit derselben bündig ist, wobei die Basisplatte (111), der senkrechte Rahmenkörper (113) und der Aufhängungsarm (114) gemeinsam einen Unterbringungsraum (16) definieren, wobei der Aufhängungsarm ferner eine gekrümmte Verbindungswand (128) umfasst, die zwischen der vorderen Seitenwand (118) und der oberen Wand (119) angebracht ist, wobei die gekrümmte Fase (116) zwischen der Seitenoberfläche (115) und der gekrümmten Verbindungswand (128) gebildet ist.

8. Das POS-System gemäß Anspruch 1, **dadurch gekennzeichnet, dass** der senkrechte Rahmenkörper (113) und die Seitenabdeckung (41) gemeinsam einen Aufnahmeraum (44) definieren, wobei der Aufhängungsarm (114) mit einer Aufnahmekerbe (117) und einem Durchgangsloch (129) gebildet ist, das mit der Aufnahmekerbe (117) und dem Aufnahmeraum (44) kommuniziert, wobei der Anzeigeschirm (13) ein Gehäuse (131) umfasst, wobei der Hostcomputer (4) ferner eine Schaltungsplatine (431) umfasst, die in dem Aufnahmeraum (44) angeordnet ist, und ein Kabel (432), das durch das Durchgangsloch (129) und das Gehäuse (131) verläuft, wobei das Kabel (432) mit dem Anzeigeschirm (13), dem Kartenleser (2) und der Schaltungsplatine (431) elektrisch verbunden ist.

## Revendications

1. Système de point de vente (POS), comprenant:
un dispositif d'affichage comportant
une base de support (11) comportant une plaque de base (111) et un châssis de support (112), ledit châssis de support (112) comportant un corps de châssis vertical (113) disposé sur ladite plaque de base (111) et présentant une surface latérale (115), et un bras de suspension (114) faisant saillie de ladite surface latérale (115) dans une direction horizontale (Y) et espacé et disposé au-dessus de ladite plaque de base (111), une jonction d'une extrémité inférieure dudit bras de suspension (114) et de ladite surface latérale (115) étant formée avec un chanfrein courbé (116),
un écran d'affichage tactile (13), et
un mécanisme de pivotement (15) disposé entre ledit bras de suspension (114) et ledit écran d'affichage (13), ledit écran d'affichage (13) étant rotatif par rapport audit bras de suspension (114) par l'intermédiaire dudit mécanisme de pivotement (15),
**caractérisé par le fait que** le système de point de vente comprend par ailleurs
un lecteur de carte (2) disposé d'un côté dudit écran d'affichage (13); et
un ordinateur hôte (4) disposé sur ledit corps de châssis vertical (113) et connecté électriquement audit écran d'affichage et audit lecteur de carte, ledit ordinateur hôte (4) comportant un couvercle latéral (41) assemblé à un côté dudit corps de châssis vertical (113) qui est opposé à ladite surface latérale (115), et un mécanisme de verrouillage (42) disposé sur ledit couvercle latéral (41) pour verrouiller ledit couvercle latéral (41) sur ledit corps de châssis vertical (113);
dans lequel
ledit corps de châssis vertical (113) est formé avec un premier trou de verrouillage (1301) et un deuxième trou de verrouillage (1271) de deux côtés opposés de ce dernier, ledit mécanisme de verrouillage (42) comportant un élément de verrouillage (421) engagé dans ledit premier trou de verrouillage (1301), un bouton de déverrouillage (422) connecté audit élément de verrouillage (421), et un ressort de rappel (423), ledit bouton de déverrouillage (422) pouvant être actionné pour pousser ledit élément de verrouillage (421) éloigné dudit premier trou de verrouillage (1301) dans une direction de dégagement (II), ledit ressort de rappel (423) sollicitant ledit bouton de déverrouillage (422) dans une direction opposée à ladite direction de dégagement (II), ledit couvercle latéral (41) comportant un crochet de verrouillage (416) engagé dans ledit deuxième trou de verrouillage (1271).

2. Système de POS selon la revendication 11, **caractérisé par le fait que** ledit bras de suspension (114) fait saillie de manière solidaire de et est d'une seule pièce avec ladite surface latérale (115), et ladite plaque de base (111) et ledit châssis de support (112) sont réalisés en métal.

3. Système de POS selon la revendication 12, **caractérisé par le fait que** ladite plaque de base (111) présente une première longueur (L1) s'étendant dans ladite direction horizontale (Y), et ledit bras de suspension (114) présente une deuxième longueur (L2) s'étendant dans ladite direction horizontale (Y) et plus petite que ladite première longueur (L1).

4. Système de POS selon la revendication 13, **caractérisé par le fait que** ledit bras de suspension (114) est formé avec une encoche de réception (117), ledit mécanisme de pivotement (15) comportant deux charnières (151) disposées entre ledit bras de suspension (114) et ledit premier écran d'affichage (13), lesdites charnières (151) étant fixées dans ladite encoche de réception (117) selon un rapport espacé dans ladite direction horizontale (Y).

5. Système de POS selon la revendication 14, **caractérisé par le fait que** ladite encoche de réception (117) présente une première partie d'ouverture (120), et une deuxième partie d'ouverture (121) communiquant avec ladite première partie d'ouverture (120), ledit écran d'affichage (13) comportant un boîtier (131), chacune desdites charnières (151) étant disposée dans ledit boîtier (131) et comportant une plaque fixe (156) ressortant dudit boîtier (131) et une vis (154) fixant ladite plaque fixe (156) audit bras de suspension (114), ladite vis (154) faisant face à ladite première partie d'ouverture (120), ledit écran d'affichage (13) étant rotatif par rapport audit bras de suspension (114) entre une première position, dans laquelle ledit boîtier (131) recouvre ladite première partie d'ouverture (120), et une deuxième position, dans laquelle ladite première partie d'ouverture (120) est exposée.

6. Système de POS selon la revendication 15, **caractérisé par le fait que** ledit bras de suspension (114) comporte une paroi latérale avant (118), une paroi supérieure (119) connectée à une extrémité supérieure de ladite paroi latérale avant (118), et deux pièces de positionnement (122) disposées dans ladite encoche de réception (117), ladite première partie d'ouverture (120) étant formée dans ladite paroi latérale avant (118), ladite deuxième partie d'ouverture (121) étant formée dans ladite paroi supérieure (119), chacune desdites pièces de positionnement (122) présentant une surface de butée (123) venant en butée contre ladite plaque fixe (156) de l'une respective desdites charnières (151), et une nervure de support (124) faisant saillie de ladite surface de butée (123), lesdites nervures de support (124) desdites pièces de positionnement (122) étant situées espacées au-dessous de ladite paroi supérieure (119), ladite surface de butée (123) étant formée avec un trou taraudé (125) pour recevoir ladite vis (154), ladite paroi supérieure (119) et ladite nervure de support (124) serrant en coopération les extrémités supérieure et inférieure de ladite plaque fixe (156).

7. Système de POS selon la revendication 16, **caractérisé par le fait que** ledit corps de châssis vertical (113) comporte une plaque supérieure (126) et une plaque avant (127), ladite paroi latérale avant (118) dudit bras de suspension (114) étant connectée à et à fleur avec ladite plaque avant (127), ladite paroi supérieure (119) dudit bras de suspension (114) étant connectée à et à fleur avec ladite plaque supérieure (126), ladite plaque de base (111), ledit corps de châssis vertical (113) et ledit bras de suspension (114) définissant en coopération un espace de logement (16), ledit bras de suspension comportant par ailleurs une paroi de connexion courbée (128) connectée entre ladite paroi latérale avant (118) et ladite paroi supérieure (119), ledit chanfrein courbé (116) étant formé entre ladite surface latérale (115) et ladite paroi de connexion courbée (128).

8. Système de POS selon la revendication 1, **caractérisé par le fait que** ledit corps de châssis vertical (113) et ledit couvercle latéral (41) définissent en coopération un espace de réception (44), ledit bras de suspension (114) étant formé avec une encoche de réception (117), et un trou traversant (129) communiquant avec ladite encoche de réception (117) et ledit espace de réception (44), ledit écran d'affichage (13) comportant un boîtier (131), ledit ordinateur hôte (4) comportant par ailleurs une carte de circuit (431) disposée dans ledit espace de réception (44), et un câble (432) passant à travers ledit trou traversant (129) et ledit boîtier (131), ledit câble (432) étant connecté électriquement audit écran d'affichage (13), audit lecteur de carte (2) et à ladite carte de circuit (431).
